Europäisches Patentamt

**European Patent Office**

Office européen des brevets

(11) Numéro de publication : **0 109 936 B1**

(12) **FASCICULE DE BREVET EUROPÉEN**

(45) Date de publication du fascicule du brevet : **30.09.87**

(51) Int. Cl.⁴ : **G 01 B 13/10**

(21) Numéro de dépôt : **83810525.2**

(22) Date de dépôt : **16.11.83**

(54) **Dispositif de mesure pneumatique des dimensions d'une pièce.**

(30) Priorité : **22.11.82 CH 6776/82**
**06.12.82 FR 8220529**

(43) Date de publication de la demande :
**30.05.84 Bulletin 84/22**

(45) Mention de la délivrance du brevet :
**30.09.87 Bulletin 87/40**

(84) Etats contractants désignés :
**CH DE GB IT LI SE**

(56) Documents cités :
**US-A- 3 069 899**
**US-A- 3 494 078**
**US-A- 4 088 009**
**WERKSTATTSTECHNIK, vol. 53, no. 4, avril 1963, pages 183-186, Berlin, DE. H. SCHULZ: " Pneumatische Messmöglichkeiten bei der Ausiesepaarung von Funktionsteilen "**

(73) Titulaire : **MESELTRON S.A.**
**Avenue Beauregard 14/18**
**CH-2035 Corcelles (CH)**

(72) Inventeur : **Sigg, Hans**
**Charmettes 15**
**CH-2006 Neuchatel (CH)**
Inventeur : **Wegmann, Heinz**
**Rümelbachstrasse 17**
**CH-8153 Rumlang (CH)**

(74) Mandataire : **de Montmollin, Henri et al**
**ICB Ingénieurs Conseils en Brevets SA Faubourg du Lac 6**
**CH-2501 Bienne (CH)**

Jouve, 18, rue St-Denis, 75001 Paris, France

## Description

La présente invention concerne un dispositif de mesure par des moyens pneumatiques des dimensions d'une pièce, et elle se rapporte plus particulièrement à un tel dispositif pour réaliser des mesures selon le procédé de mesure par pression différentielle définie par la norme DIN 2271.

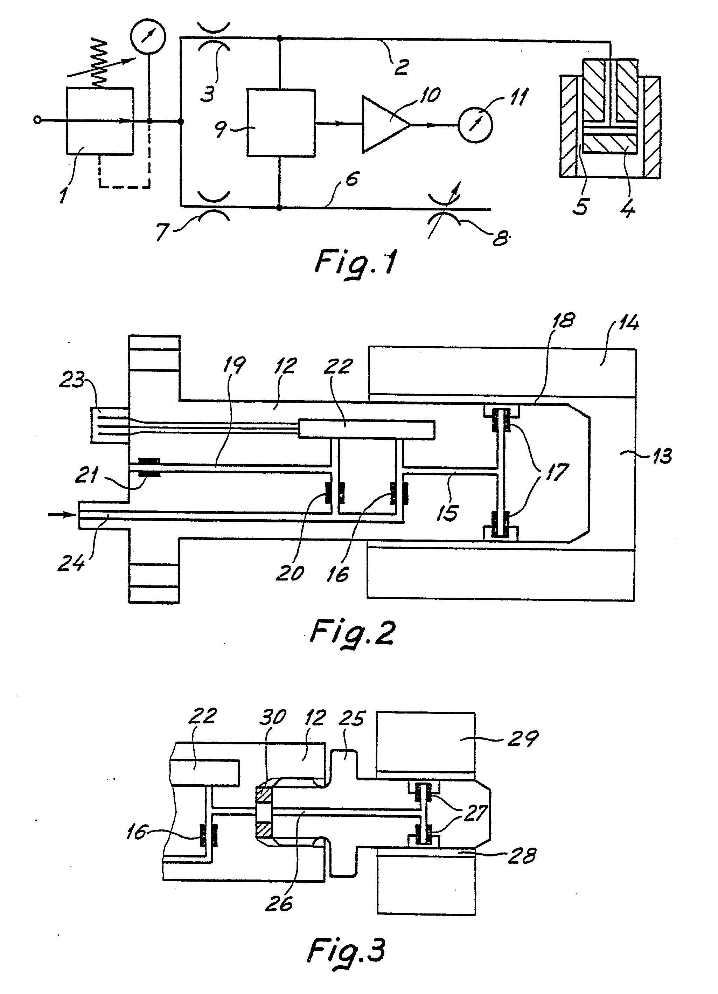

Comme on le voit dans la figure 1, ce procédé consiste à alimenter par l'intermédiaire d'un régulateur de pression 1 un circuit pneumatique comprenant une première branche 2 munie d'une buse d'entrée 3 et d'une broche de mesure 4 susceptible par exemple d'être introduite dans un alésage 5 dont le diamètre doit être mesuré, ainsi qu'une deuxième branche 6 munie d'une buse d'entrée 7 débouchant dans une buse de référence 8, dont le débit peut être réglable. Un transducteur de pression 9 branché entre les branches 2 et 6 délivre un signal électrique représentatif de la différence des pressions régnant dans ces branches, qui est amplifié par un dispositif amplificateur 10 avant d'être fourni par exemple à un dispositif indicateur 11. Il est clair ainsi que si la broche 4 est introduite dans un alésage plus grand par exemple, la pression régnant dans la branche 2 sera réduite, et la variation de la pression différentielle détectée par le transducteur 9 sera représentative de l'augmentation du diamètre de l'alésage 5. L'intérêt essentiel du montage différentiel est d'absorber automatiquement des variations parasites de pression, dues par exemple au fonctionnement du régulateur de pression 1, ou à des effets de température.

Dans les dispositifs connus qui mettent en œuvre ce procédé, comme celui que l'on trouve dans le brevet US-A-4 088 009, on utilise un transducteur dans lequel par exemple le déplacement d'une membrane est détecté par un capteur inductif associé à cette dernière. Toutefois, on observe dans le signal délivré par ce type de transducteur un signal de bruit qui se superpose au signal représentatif de la dimension mesurée et dont l'amplitude trop importante exclut l'utilisation des systèmes connus pour un certain nombre de mesures de précision.

En outre, on constate que les systèmes connus sont généralement très sensibles aux vibrations, en raison de la présence d'éléments mécaniques mobiles dans le transducteur, ce qui peut conduire à des perturbations ou des erreurs dans la mesure. C'est pourquoi il est nécessaire de loger la plupart des éléments du circuit pneumatique, y compris les buses d'entrée et de référence ainsi que le transducteur dans un boîtier séparé, auquel la broche de mesure est raccordée par un conduit, englobant un volume important d'air, ce qui provoque un allongement important de la constante de temps du dispositif de mesure.

Un autre désavantage encore des dispositifs connus réside dans la difficulté de leur réglage. En particulier le réglage de la sensibilité de la mesure est obtenu par des modifications de la géométrie des buses, qui peuvent entraîner à leur tour un déplacement de la caractéristique linéaire du dispositif de mesure, et du zéro du signal électrique de mesure.

C'est pourquoi, l'objet de la présente invention est de proposer une amélioration des dispositifs connus, qui permette de réduire considérablement le bruit de mesure, de même que la constante de temps et la sensibilité aux vibrations, tout en autorisant un réglage simple et indépendant de la sensibilité du dispositif et de zéro du signal de sortie.

A cet effet, on prévoit d'utiliser un transducteur de pression différentielle à éléments semiconducteurs et de disposer l'ensemble du transducteur et du circuit pneumatique à l'intérieur même de la broche de mesure. Tout en laissant la liberté de définir le circuit pneumatique de manière optimale, de façon à limiter au maximum la production de bruit de mesure, cette solution permet d'obtenir un dispositif de mesure totalement insensible aux vibrations, et dont la constante de temps, de l'ordre d'un dixième de seconde, est suffisamment faible pour permettre de réaliser des mesures extrêmement rapides, par exemple entre deux pénétrations dans une pièce d'un outil d'usinage oscillant, ou de mesurer des surfaces discontinues d'une pièce en mouvement.

Avant de décrire en détail plusieurs modes possibles de mise en œuvre de l'invention afin de mieux la faire comprendre il est utile de préciser que l'on a déjà proposé dans le brevet US-A-3 494 078 de placer un transducteur à élément semi-conducteur dans la broche d'un dispositif de mesure pneumatique des dimensions d'une pièce mais il s'agissait alors simplement d'une résistance qui permettait de mesurer la pression absolue dans une chambre reliée à l'extérieur dans laquelle elle était logée et, vu que ce dispositif ne comportait pas véritablement de circuit pneumatique, il n'y avait aucune raison de la placer ailleurs.

La description qui suit sera faite en référence au dessin annexé sur lequel :

la figure 1 est une vue schématique d'un dispositif de mesure pneumatique de l'art antérieur ;

la figure 2 est une vue schématique en coupe d'un dispositif de mesure selon une première variante de l'invention ;

la figure 3 est une représentation en coupe partielle d'une autre variante du dispositif de mesure selon l'invention ;

la figure 4 est une représentation schématique d'une autre variante encore du dispositif de mesure selon l'invention ; et

la figure 5 est un schéma d'un circuit d'alimentation et de commande d'un transducteur d'un dispositif de mesure selon l'invention.

Dans la figure 2 on a représenté une broche de mesure 12 dont l'extrémité est engagée dans l'alésage 13 d'une pièce 14. Le dispositif de mesure pneumatique est entièrement inclus dans la broche 12, et il comporte notamment une première branche 15 délimitée par une buse d'entrée 16 et deux buses de mesure 17 disposées symétriquement de part et d'autre de l'extrémité cylindrique 18 de la broche 12, en regard des parois de l'alésage 13 à mesurer. Une deuxième branche 19 est délimitée par une buse d'entrée 20, et une buse de référence 21, qui peut être réglable. La différence de pression entre les branches 15 et 19 est captée par un transducteur de pression différentielle à élément semi-conducteur 22, relié électriquement à une borne de branchement 23 permettant d'alimenter le transducteur 22, et de recueillir le signal représentatif de la pression différentielle entre les branches 15 et 19 du circuit pneumatique. Une conduite 24 permet de raccorder les buses d'entrée 16 et 20 à une source de pression régulée extérieure.

Le transducteur de pression différentielle à élément semi-conducteur 22 utilisé dans le dispositif de mesure est constitué essentiellement d'une plaquette semi-conductrice dans laquelle a été réalisée une membrane par des procédés d'usinage chimique, ainsi qu'un pont de piézo-résistances formées sur la membrane et des éléments amplificateurs. De tels transducteurs de pression, et leur fabrication sont décrits par exemple dans la demande de brevet FR-A-2 266 314, et ils sont distribués en particulier par les sociétés dites National Semi-conductor Corporation, ou Honeywell. Le faible volume du transducteur 22 permet très facilement de l'intégrer à la broche de mesure 12, de manière à réduire de façon extrêmement importante le volume de l'air circulant dans le circuit pneumatique. En outre, les branches 15 et 19 du circuit pneumatique dont les pressions sont comparées sont disposées à proximité immédiate l'une de l'autre, et soumises par conséquent à la même température, ce qui élimine en grande partie les influences de la température.

Selon un autre aspect de l'invention, il est apparu intéressant de dimensionner la buse de référence 21 de telle manière que la pression différentielle entre les deux branches soit nulle au moment où les dimensions de la pièce 14 atteignent leur valeur de consigne. En effet, la stabilité et la précision de la mesure des dimensions sont maximales lorsque cette pression différentielle est voisine de zéro et la disposition précédente permet de s'assurer que la précision maximale est obtenue, par exemple en cours d'usinage, lorsque l'on s'approche des dimensions de consigne.

Dans la figure 3 on a représenté une variante de construction de la broche de mesure 12 de la figure 2, dans laquelle l'extrémité de cette broche est munie d'un embout amovible 25. Cet embout est par exemple vissé à l'extrémité de la broche 12, et il comporte une conduite 26 permettant de raccorder deux buses d'extrémité 27 à la buse d'entrée 16 et du transducteur 22. Ainsi, la même broche de mesure 12, avec les avantages qui en résultent, peut être utilisée pour mesurer le diamètre d'un alésage de faible dimension 28 dans une pièce 29. Un joint annulaire 30 assure l'étanchéité de la première branche du circuit pneumatique.

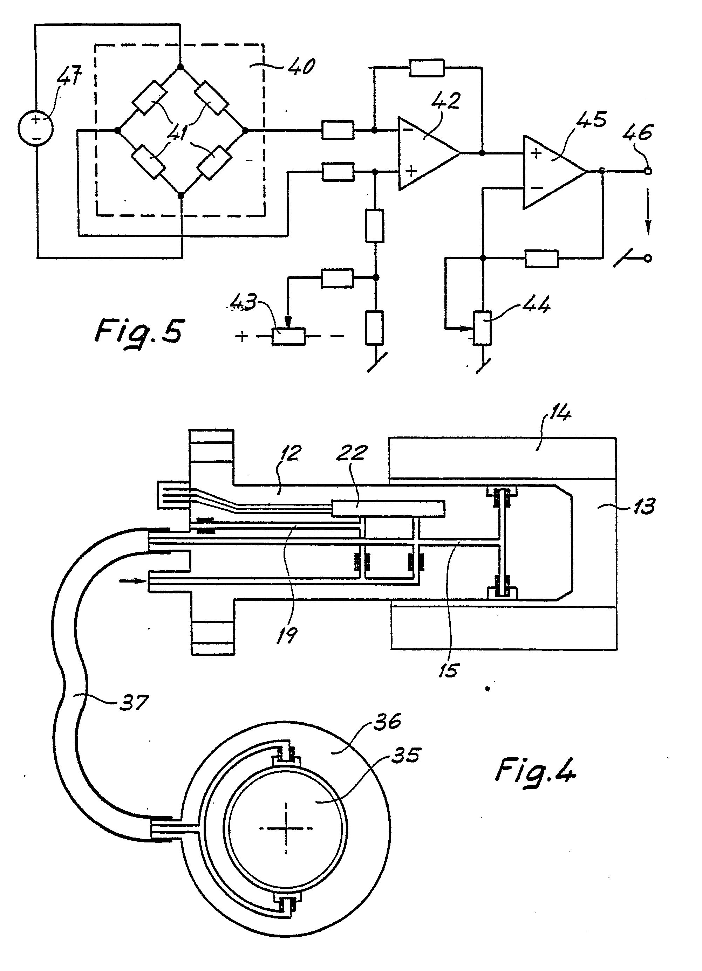

Dans la figure 4 on a représenté une broche 12 identique à celle de la figure 2, mais qui est adaptée de manière à permettre la rectification d'un alésage apparié aux dimensions d'un arbre déterminé 35. A cet effet, on utilise un anneau de mesure 36, d'un type classique, qui constitue l'équivalent d'une broche de mesure pour mesurer le diamètre d'un arbre. Il existe également des étriers n'entourant que partiellement l'arbre mesuré, mais qui remplirait la même fonction. De tels dispositifs sont définis par exemple dans la norme DIN 2271, partie 2. Selon l'invention, l'anneau de mesure 36 est relié directement par une conduite 37 à l'extrémité de la branche 15 du circuit pneumatique du dispositif inclus dans la broche 12. Ainsi, le transducteur 22 permet une mesure comparative des diamètres de l'alésage 13 et de celui de l'arbre 35.

Dans la figure 5 on a représenté de façon schématique un circuit de commande du transducteur de pression différentielle utilisé dans le dispositif de l'invention. Ce transducteur est schématisé dans le cadre en traits pointillés 40 par un pont de piézo-résistances 41 qui sont alimentées par l'intermédiaire d'une alimentation 47, de préférence une source de courant. Un amplificateur opérationnel 42 dont l'une des entrées est commandée par l'intermédiaire d'un potentiomètre réglable 43 permet d'assurer le réglage du zéro du signal de sortie, tandis que le gain de l'amplification est défini par le potentiomètre 44 qui agit sur l'amplificateur 45, à la sortie 46 duquel peut être recueilli le signal représentatif de la dimension mesurée.

Les caractéristiques dimensionnelles et dynamiques du dispositif de mesure selon l'invention lui permettent de s'appliquer à de nombreux types de mesures dans le domaine de l'usinage de pièces. En particulier il est particulièrement bien adapté pour être monté à l'intérieur de la poupée porte-pièce d'une rectifieuse intérieure, et relié cinématiquement à la poupée porte-outil, de manière à effectuer une mesure de diamètre de l'alésage de la pièce rectifiée lors de chaque oscillation de l'outil, et de permettre ainsi de régler en continu l'avance de la meule, tout au long de l'opération de rectification, et de l'arrêter lorsque la dimension nominale de l'alésage est atteinte.

**Revendications**

1. Dispositif de mesure par des moyens pneumatiques des dimensions d'une pièce, comprenant notamment un circuit pneumatique comportant une première branche (15) munie d'une première buse d'entrée (16) et d'au moins une buse de mesure (17) et une deuxième branche (19) munie d'une seconde buse d'entrée (20) et débouchant dans une buse de sortie de référence (21), un transducteur de pression différentielle (22) délivrant un signal électrique représentatif de la différence des pressions régnant dans les deux branches du circuit pneumatique, une broche de mesure (12) à la surface de laquelle débouche la/les buses de mesure (17, 27), et des moyens (24) pour raccorder les buses d'entrée (16, 20) à une source de pression régulée, caractérisé en ce que le transducteur (22) de pression différentielle est à élément semi-conducteur et en ce que le circuit pneumatique et le transducteur (22) de pression différentielle sont logés intégralement à l'intérieur de la broche de mesure (12).

2. Dispositif selon la revendication 1, caractérisé en ce que la broche de mesure comporte une extrémité cylindrique (18) pour la mesure du diamètre d'un alésage, et en ce que deux buses de mesures symétriques (17) débouchent en deux endroits opposés de l'extrémité cylindrique.

3. Dispositif selon l'une des revendications précédentes, pour la mesure du diamètre d'un alésage, caractérisé en ce que la buse de référence (21) et les deux buses d'entrée (16, 20) sont dimensionnées de manière qu'il s'établisse une pression sensiblement égale dans lesdites deux branches (15, 19) du circuit pneumatique lorsque le diamètre de l'alésage (13) présente une valeur nominale prédéterminée.

4. Dispositif selon l'une des revendications précédentes, caractérisé en ce que la broche de mesure comporte un embout interchangeable (25), dans lequel sont logées la ou les buses de mesure (27).

5. Dispositif selon l'une des revendications précédentes, caractérisé en ce qu'il comporte en outre un anneau ou un étrier (36) de mesure pneumatique du diamètre d'un arbre (35) pour permettre la rectification d'un alésage apparié aux dimensions de cet arbre.

**Claims**

1. A device for pneumatically measuring the dimensions of a piece, comprising inter alia a pneumatic circuit having a first limb (15) provided with a first input nozzle (16) and at least one measurement nozzle (17) and a second limb (19) provided with a second input nozzle (20) and opening in a reference output nozzle (21), a differential-pressure transducer (22) issuing an electric signal representative of the difference between the pressures prevailing in the two limbs of the pneumatic circuit, a measurement probe (12) in whose surface the measurement nozzle(s) (17, 27) open(s) and means (24) for connecting the input nozzles (16, 20) to a regulated pressure source, characterized in that the differential-pressure transducer (22) includes a semiconductor element and in that the pneumatic circuit and the differential-pressure transducer (22) are wholly housed inside the measurement probe (12).

2. A device as in claim 1, characterized in that the measurement probe has a cylindrical end portion (18) for measuring the diameter of a bore, and in that a pair of symmetrical measurement nozzles (17) open in two opposite locations of the cylindrical end portion.

3. A device as in any preceding claim for measuring the diameter of a bore, characterized in that the reference nozzle (21) and the two input nozzles (16, 20) are sized whereby a substantially equal pressure is set up in said two limbs (15, 19) of the pneumatic circuit when the diameter of the bore (13) has a predetermined nominal value.

4. A device as in any preceding claim, characterized in that the measurement probe has an interchangeable tip (25) in which are housed the measurement nozzle(s) (27).

5. A device as in any preceding claim, characterized in that it further comprises a ring or a stirrup (36) for pneumatically measuring the diameter of a shaft (35) whereby a bore may be rectified to match the size of said shaft.

**Patentansprüche**

1. Messvorrichtung für die Bestimmung von Werkstückabmessungen mit pneumatischen Mitteln, umfassend insbesondere einen pneumatischen Kreis, der einen ersten Zweig (15) mit einer ersten Eingangsdüse (16) und mindestens einer Messdüse (17) sowie einen zweiten Zweig (19) mit einer zweiten Eingangsdüse (20) beinhaltet und auf eine Referenzausgangsdüse (21) führt, einen Differentialdruckwandler (22), der ein der Differenz der in den beiden Zweigen des Pneumatikkreises herrschenden Drücke entsprechendes elektrisches Signal liefert, einen Messdorn (12), auf dessen Oberfläche die Messdüsen (17, 27) münden, und Mittel (24) zum Anschliessen der Eingangsdüsen (16, 20) an eine ausregelte Druckquelle, dadurch gekennzeichnet, dass der Differentialdruckwandler (22) mittels Halbleiterelement arbeitet und dass der Pneumatikkreis und der Differentialdruckwandler (22) vollständig im Innern des Messdorns (12) angebracht sind.

2. Vorrichtung gemäss Anspruch 1, dadurch gekennzeichnet, dass der Messdorn ein zylindrisches Ende (18) zum Messen eines Bohrungsdurchmessers umfasst, und dass zwei symmetrische Messdüsen (17) an zwei gegenüberliegenden Stellen auf dem zylindrischen Ende des Messdorns münden.

3. Vorrichtung gemäss einem der vorhergehenden Ansprüche, zum Messen des Durchmessers einer Bohrung, dadurch gekennzeichnet, dass die Referenzdüse (21) und die beiden Eingangsdüsen (16, 20) so bemessen sind, dass sich in den beiden genannten Zweigen (15, 19) des Pneumatikkreises ein praktisch gleicher Druck aufbaut, wenn der Bohrungsdurchmesser (13) einen vorbestimmten Nennwert aufweist.

4. Vorrichtung gemäss einem der vorhergehenden Ansprüche, dadurch gekennzeichnet, dass der Messdorn ein auswechselbares Ansatzstück (25) umfasst, in welchem eine oder mehrere Messdüsen (27) angeordnet sind.

5. Vorrichtung gemäss einem der vorhergehenden Ansprüche, dadurch gekennzeichnet, dass sie ferner einen pneumatischen Messring oder Messbügel (36) zur Durchmesserbestimmung einer Welle (35) umfasst, um dass Schleifen einer zu den Abmessungen dieser Welle gepaarten Bohrung zu gestatten.

Fig.1

Fig.2

Fig.3

Fig.5

Fig.4